# EUROPEAN PATENT APPLICATION

(11) **EP 1 044 935 A1**
(43) Date of publication of application: **18.10.2000**
(21) Application number: 99810305.5
(22) Date of filing: 13.04.1999
(51) Int. Cl.: C03C 25/66, C03C 25/10, C03C 25/48

(54) **A low weight resistant porous glass fiber having physical, chemical or biological properties**

(71) Applicant: ECOLE POLYTECHNIQUE FEDERALE DE LAUSANNE, 1015 Lausanne (CH)
(72) Inventor: Kiwi-Minsker, Lioubov, 1026 Echandens (CH); Iouranov, Igor, 1022 Chavannes (CH); Renken, Albert, 1025 St-Sulpice (CH)
(74) Representative: Moinas, Michel

(57) **Abstract**

A low weight resistant porous glass fiber of type I is disclosed with a developed specific surface area of 5 times to 120 times the outer surface of a standard glass fiber, and a material having physical, chemical or biological reactive properties deposited on the developed surface area of said porous glass fiber.

A low weight resistant porous glass fiber of type II is deisclosed as well with a developed specific surface area of 20 times to 200 times the outer surface of a standard glass fiber. The developed surface of said porous glass fiber is covered with a material capable of being a support for receiving a material having physical, chemical or biological reactive properties, and a material having physical, chemical or biological reactive properties is deposited on the intermediate support material covering the porous glass fiber.

Corresponding processes of preparation and various uses are described.

## Description

This invention is relating to a low weight resistant porous glass fiber having physical, chemical or biological properties and an increased developed specific surface area with regard to the outer surface of a standard glass fiber.

In a number of chemical reactions, as well as in biological reactions, it is desirable that one of the species be in a solid phase. Said species may be an inducer, a catalyst like in the case of exhausted gas from a combustion engine (gasoline and diesel motors on vehicles for instance), or one of the reagent itself.

Said catalyst are normally deposited on a support and, to be effective, should present a great specific surface area, which in turn means that the support must have a great specific surface area. Ordinary glass fibers are not useable since they have too low a specific surface area.

The use of glass fiber catalysts (as they are called) for the treatment of automobile exhaust gas mixtures is known and described for instance by D. M. Nicholas et al, Ind. Eng. Chem., Prod. Res. Dev., vol. 15, No 1, 1976, pages 29-35. In the process of preparation, the glass fibers are modified and their specific surface areas increased by a preliminary step in which all the non silica components are leached out by an acidic treatment. This leads to highly porous fibers having almost half of their weight. In practice however, said fibers are by far too fragile or crumbly to be used on a large industrial heavy duty scale.

The mechanical strength or resistance of this type of catalytic fibers is really a problem as well in other applications such as chemical reactions in a reactor. Stirring is necessary, at least to avoid the formation of clogging slurry or paste and to maintain a homogenous suspension of the catalyst. The highly porous fibers are again too fragile to survive such a stress.

A similar problem may arise when the catalytic fiber are packed in columns due to handling difficulties.

In US 5'155'083 which concerns again the treatment of exhaust gas a process is described wherein fibers are organized as a woven or non woven cloth and the catalyst fills up the fiber clearance of the cloth. The cloth is prepared previously with an acidic leaching out treatment and is reported then to have an overall improved strength.

Said process do not solve the question of the strength of the fiber itself, which can only be used as a cloth or a fabric and not as individual fibers or as a loose bundle of fibers. Moreover, most of the catalyst is simply filling the meshes of the cloth without being essentially linked or connected to the fibers.

The above mentioned problem and contradiction of having a high specific area due to a huge porosity while retaining a sufficient mechanical strengh is solved by the porous glass fiber according to the invention which concerns a low weight resistant porous glass fiber with a developed specific surface area at 5 times to 120 times the outer surface of a standard glass fiber, a material having physical, chemical or biological reactive properties being deposited on the the surface of said porous glass fiber.

By the expression "5 times to 120 times, (and later by " 20 to 200 imes"), it is referred to the ratio between the outer surface of the starting glass fiber and the ration of the leached out nude fiber, as measured before deposition of any active material.

"Physical properties" mean for instance properties of absorption or adsorption.

By contrast with the prior art fibers, said fibers may be used not only as a cloth, but also as individual fibers or in loose arrangements such as bundles. The resistance is that of the fiber itself and not conferred by a specific structure.

Said fiber is highly porous, since its developed specific surface area may be comprised between 10 and 120 m²/g, with comparison to a usual value of 0.1 to 2 m²/g for an ordinary glass fiber. Its native mechanical strength is not impaired too much by the increased porosity. Being very porous, it is light in weight.

The active materials are linked to the developed surface of the fiber directly, and not filling up the empty spaces between the fibers, as described above.

Typically the porosity is located on the first 5 to 25 % of the diameter of the fiber and do not extend substantially to the inner core of the fiber.

As it will be explained later, said fiber may be prepared by a preliminary leaching out treatment in acidic medium, but limited to the removal of 5 to 50 % of the non silica components.

The active material is then deposited on the surface of the fiber with the increased specific area increased, by conventional process such as impregnation, soaking, ion exchange, spraying, surface chemical reaction, vapor phase deposition (VPC), depending on the active material concerned.

The active fiber consists then essentially of a glass fiber with increased porosity, the developed surface of which is covered, at least partly, with the active material.

Said active material may be scarcely or totally dispersed on the developed surface of the fiber, for example from a few to 100 %, homogeneously spread or in patches. It may form a partial layer of variable width or even with holes, or be in a form of a complete layer or coating.

The active fiber consists then essentially of a glass fiber with increased porosity, the developed surface of which is covered, at least partly, with the active material. For clarification purpose, said fibers being essentially made of a partially leached out glass fiber covered at least partially by one layer of active material will be designated as fibers of type I.

They may be used in a loose state or in bundles in industrial or commercial processes like those described above and below. It may be used also, of course, as a woven or non woven fabric or cloth.

A process for preparing a glass fiber of type I according to the invention may comprise the following steps :
a) treating a glass fiber to leach out part of its non silica components to generate pores within the glass fiber and increase its surface area,
b) depositing onto the surface of the treated fiber a material having physical, chemical or biological reactive properties.

The leaching out process, as detailed below, is carried on until about 5 to 50 % of the non silica material is removed.

The active material is then deposited on the surface of the fiber having its specific area increased, by conventional process such as impregnation, soaking, spraying, ion exchange, surface chemical reaction, vapor phase deposition (VPC), depending on the active material concerned.

The invention concerns also a low weight resistant porous glass fiber with a developed specific surface area at 20 times to 200 times the outer surface of a standard glass fiber, the developed surface of said porous glass fiber being covered with a material capable of being a support for receiving a material having physical, chemical or biological reactive properties, and a material having physical, chemical or biological reactive properties being deposited on the intermediate support material covering the porous glass fiber.

The active material is linked to the support coating the fiber.

The support should be able to bring back some resistance to the fragile and deeply leached out fiber, i. e. a material capable to restore at least partially the mechanical strength or resistance of the original fiber. Examples of such support material are oxides or oxides generated from corresponding precursors (for instance by calcination), organo-silanes or organic polymers .

Said fiber is highly porous, since its developed specific surface area may be comprised between 40 and 400 m²/g. Its native mechanical strength is impaired by the deep porosity, but is restored sufficiently by the support . Despite the presence of the intermediate support, it is still light in weight.

Typically the porosity goes deeply into the fiber and may extend to the inner core of the fiber.

For clarification purpose, said fibers being essentially made of a strongly leached out glass fiber covered by a layer of support material and then at least partially by an active material will be designated as fibers of type II.

A process for preparing a glass fiber of type II according to the invention may comprise the following steps :
a) treating a glass fiber to leach out a substantial part of its non silica components to generate pores within the glass fiber and increase its surface area,
b) covering at least partially the developed specific surface area of the treated fiber with a support material,
c) depositing onto the surface of the support a material having physical, chemical or biological reactive properties.

The leaching out process, as detailed below, is carried on until about 3 to 100 % of the non silica material is removed.

The active material may be deposited on the surface of the treated fiber, by a conventional process such as impregnation, soaking, spraying, ion exchange, surface chemical reaction, vapor phase deposition (VPC), depending on the active material concerned.

For fibers of type I as for fibers of type II, the active material is selected from the group consisting essentially of metals and metal oxides, minerals and organic complexes, ion exchange resins, clay, zeolithes, cabon, mesoporous materials, enzymes, peptides, proteins, cells, antibodies, antigens, viruses and retro-viruses, plasmides, RNA and DNA sequences.

Examples of active metallic materials are aluminum, silicium, titanium, zirconium, platinum, palladium, rhodium, iridium, osmium, gold, silver, magnesium, calcium, chromium, iron, copper, nickel, cobalt and mixtures thereof, in the form of metals, oxides and/or metallo-organic complexes. The oxide may be an oxide or an oxide precursor.

Other suitable oxides are oxides of vanadium, molybdenum, lead, zinc, potassium, phosphorous and mixtures thereof.

It should be noted that in type II fibers, the support material may be at the same time an active material vis-a-vis physical, chemical or biological reactions, such as metallic oxides for instance. Examples of oxides being both a support material and an active material are oxides of Al, Ti, Zr, Mg, Ca, Cu,Ni, Co, V, Mo and their mixtures.

The use of first active material as a support, covered by a further and different active material outside gives the possibility of preparing a bi-functionnal active glass fiber.

In the treatment of the fibers according to the invention the leaching out process is conducted in a mineral acid, such as hydrochloric or nitric acid 0.5 to 5 N

Time and temperatures depend of the type of fiber seeked, for instance from 0.1 to 30 min at 20 to 95°C for fibers of type I ; from1 to 90 min at 60 to 95°C for fibers of type II.

The acidic treatment may be followed by an additional leaching out step in alkaline conditions (ammonia, sodium or potassium hydroxides for instance).

Preferably, between each successive step of treatment, the glass fiber is rinsed and washed.

Both type of fibers may be used in a loose state or in bundles in industrial or commercial processes like those described above and below. It may be used also, of course, in an organized structure such as a woven or non woven fabric, cloth, tissue, gauze, grid, etc.

The highly porous glass fibers according to the invention, or of a woven or non woven fabric made thereof, may be used as a catalyst for oxidation, combustion, hydrogenation, alkylation or hydroxylation chemical reactions. In this case, the active and/or support material is selected from the group consisting essentially of metals and metal oxides, minerals and organic complexes, ion exchange resins, carbon, clay, zeolithes, carbon or mesoporous materials.

They may be used as well for their physical properties as an absorbent or an adsorbent. The active material may be then an ion exchange resin, carbon, clay, a zeolithe, carbon or a mesoporous material.

Another use is as a bioprobe or bioassay in biological or test kits for detection of disorders, diseases, pollution, etc. In this case the material is selected from the group consisting essentially of enzymes, peptides, proteins, cells, antibodies, antigens, viruses and retro-viruses, plasmides, RNA and DNA sequences.

The invention will be now illustrated by way for a number of non limitative examples, as follows :
Example 1 : Leaching out procedure

This example illustrates a method used for leaching alumoborosilicate glass (E) fibers to form porous materials.

Alumoborosilicate glass fibers with diameter of elementary filament of 7 µm supplied by Vetrotex France S.A. were used. The fibers (10 g) in woven form were heated in air at 400°C for 1 hour to remove any organics.

A leaching solution of 3.5 % wt. aqueous hydrochloric acid was prepared by adding to 1.5 liter glass 900 ml demineralised water and 100 ml 35 % wt. aqueous hydrochloric acid.

The solution was heated up to defined temperature from the interval 20-95°C with stirring and alumoborosilicate glass fibers were added and exposed in the solution during defined time from 1 min up to 3 hours. Leached fibers washed with demineralised water several time and air dried at room temperature during the night.

Dependencies of the specific surface area (SSA) of glass fibers on the treatment time and temperature are shown in Table 1a and Table 1 b.

**Table 1a**

| The influence of leaching time on the SSA of glass fibers at 95°C. | | | |
|---|---|---|---|
| **Sample no.** | **Time of leaching, min** | **Pores size, A** | **SSA, m**^{**2**}**/g** |
| 1 | unleached | - | 2 |
| 2 | 1 | < 30 | 150 |
| 3 | 2 | < 30 | 250 |
| 4 | 5 | < 30 | 320 |
| 5 | 15 | < 30 | 325 |
| 6 | 30 | < 30 | 340 |
| 7 | 60 | < 30 | 345 |

**Table 1b**

| The influence of leaching temperature on the SSA of glass fibers. | | | | |
|---|---|---|---|---|
| **Leaching time, min** | **95°C** | | **60°C** | |
| | **Sample no.** | **SSA, m**^{**2**}**/g** | **Sample no.** | **SSA, m**^{**2**}**/g** |
| 1 | 2 | 150 | 7 | 15 |
| 2 | 3 | 250 | 8 | 40 |
| 5 | 4 | 320 | 9 | 70 |
| 15 | 5 | 325 | 10 | 130 |
| 30 | 6 | 340 | 11 | 220 |
| 60 | 7 | 345 | 12 | 320 |

### Example 1a

This example illustrates the preparation method of Pt and Pd catalysts based on partially leached out porous fibers.(fibers of type I).

The fibers were leached out as described in example 1. Palladium (II) chloride (PdCl₂) and chloroplatinic acid (H₂PtCl₆) (purum, Fluka Chemie AG, Buchs, Switzerland) were used as precursors of the active components. The Pd and Pt supported glass fiber catalysts were prepared by the metal deposition from aqueous NH₃ solutions via ion-exchange method, or by wet-impregnation, followed by calcination at 450°C in air during 3 hours. The content of Pd and Pt was varied from 0.02 to 1.0 %wt.

### Example 1b

Pd and Pt supported on glass fibers are shown to be active catalysts for the total oxidation of CO and hydrocarbons at atmospheric pressure. The catalyst can be used as effective materials for catalytic incinerators at moderate temperatures (100 to 250°C) and high gas hourly space evlocities of up to 30 000 h¹.

This example illustrates the use of porous fibers, in the form of woven fabric, onto which platinum was deposited, for the catalytic oxidation of CO.

The samples were prepared as in Example 1a.

Continuous fixed bed reactor with external recycle loop was used in this study. In each test, rolled up catalysts (0.4 g) in the form of knitted gauze was placed into the reactor. The temperature in the catalyst bed was measured with thermocouple. CO₂ concentration was continuously measured by infrared. Gas mixtures of 0.1 to 2.5 vol.% and 10vol.% O₂ in Ar was used. Before the reaction the catalysts were reduced in flow of hydrogen (3% in Ar) at 300°C for 3 h.

·Activity of the catalysts in CO oxidation and the ignition temperatures are presented in Table2 below.

**Table 2**

| Characteristics of the glass fiber supported catalysts used for CO oxidation. | | | | | | |
|---|---|---|---|---|---|---|
| **Catalyst** | **Metal cont., wt%** | **SSA , m2/** g | **Metal conc., mmol/m2** | **R (180°C), molCO/g Pd s** | **R (180°C), molCO/gc at s** | **Tig,°C (1%CO)** |
| 0.2 Pd/EGF-15 | 0.2 | 15 | 1.3·10-3 | 2.0·10-4 | 4.0·10-7 | 165 |
| 0.2 Pd/EGF-60 | 0.2 | 60 | 3.15·10-4 | 6.6·10-5 | 1.1·10-7 | 220 |
| 1.0 Pd/EGF-60 | 1.0 | 60 | 1.5·10-3 | 2.5·10-4 | 2.5·10-6 | 155 |
| 0.2 Pt/EGF-15 | 0.2 | 15 | 1.3·10-3 | 9.2·10-5 | 1.8·10-7 | 195 |

### Example 2

This example illustrates the wet impregnation method of metal oxide layer formation on the porous part of fibers to obtained composite materials (fibers of type II).

The fibers (35.5 g) in the form of woven cloth were heated in air at 400°C for 1 hour to remove any protective sizing. The leaching solution (1 liter of 3.5 % wt. aqueous hydrochloric acid) was heated up to 95°C with stirring and alumoborosilicate glass fibers were added to the solution. The fibers were exposed in the solution for 1 hour. Leached fibers washed with demineralised water several time and air dried at room temperature during the night. After this treatment completely leached out fibers were obtained. Weight loss was 45% wt.

Different metal oxide layers were formed on the surface of porous glass fibers as described below.

Sample 13 (5 g) (Table 3) was obtained by impregnation of pre-treated fibers with solution of titanium prepared by dissolving of TiOSO₄ xH₂SO₄ xH₂O (8.25 g) in 100 ml H₂O. Then the sample was dried at room temperature overnight and calcined in air at 650°C during 1 hour. This sample is suitable as a catalyst for photodecomposition.

Sample 14 (4.5 g) was obtained by impregnation of leached fibers with solution of aluminum prepared by dissolving of Al(NO₃)₃ 9H20 (10.2 g) in 100 ml H₂O. Then the sample was dried at room temperature overnight and calcined in air at 650°C during 1 hour. This sample is suitable for alkylation.

Sample 15 (5.2 g) was obtained by impregnation of leached fibers with solution of zirconium prepared by dissolving of Zr(NO₃)₄ 5H₂O (16.84 g) in 100 ml H₂O. Then the sample was dried at room temperature overnight and calcined in air at 650°C during 1 hour.

Sample 16 (5.3 g) was obtained by impregnation of leached fibers with solution of copper prepared by dissolving of Cu(NO₃)₂ 3H₂O (6.3 g) in 100 ml H₂O. Then the sample was dried at room temperature overnight. This subsequence of the steps was repeated 4 times. Then the sample was calcined in air at 650°C during 1 hour. This sample is suitable for hydroxylation or oxidation.

Sample 17 (5.5 g) was obtained by impregnation of leached fibers with solution of chromium prepared by dissolving of Cr(NO₃)₃ 9H₂O (10.25 g) in 100 ml H₂O. Then the sample was dried at room temperature overnight and calcined in air at 650°C during 1 hour. This sample is suitable for a total oxidation.

Sample 18 (5 g) was obtained by impregnation of leached fibers with solution of silicon prepared by dissolving of Si(C₂H₅O)₄ (17.2 ml) in mixture of 50 ml H₂O and 50 ml C₂H₅OH. Then the sample was dried at room temperature overnight and calcined in air at 650°C during 1 hour. This sample is suitable as a sorbent.

The amount of metal oxides in final materials is presented in Table 3. The obtained materials were the porous woven cloths of different colors having uniformly deposited metal oxides (photo).

**Table 3**

| **Sample no.** | **Modifying substance** | **Content of metal oxide, %wt.** | **SSA, m**^{**2**}**g** |
|---|---|---|---|
| *) | - | - | 11 |
| 13 | TiO₂ | 0.8 | 56 |
| 14 | Al₂O₃ | 0.7 | 40 |
| 15 | ZrO₂ | 2.3 | 55 |
| 16 | CuO | 1.0 | 35 |
| 17 | Cr₂O₃ | 0.9 | 38 |
| 18 | SiO₂ | 2.3 | 60 |

| | | | |
|---|---|---|---|
| *) porous material without metal oxide deposition but after calcination in air at 650°C during 1 hour | | | |

### Example 3

This example illustrates the ion-exchange method of metal oxide layer formation on the surface of the porous part.

Dry leached fibers prepared as in Example 1 (samples 2-7) were exposed to the aqueous solution of ammonia (5%wt.) and Cu(NO₃)₂ 3H₂O (5%wt.) for 1 hour, washed with demineralised water and air dried. Then the samples were calcined at 400-650°C for 0.5 hour.

Metal content in resulting composite materials depends on the SSA of glass fibers used as shown in Table 4.

**Table 4**

| Dependence of copper content on SSA of fibers used. | | | |
|---|---|---|---|
| **Samples no.** | **SSA, m**^{**2**}**/g** | **Temperature of calcination** | **Content of copper, %wt.** |
| 19 | 150 | 400 | 1.4 |
| 20 | 320 | 400 | 3.1 |
| 21 | 325 | 400 | 3.3 |
| 22 | 340 | 650 | 3.4 |
| 23 | 345 | 650 | 3.4 |

### Example 4

This example compares modified and non-modified ceramic fibers in the form of single thread with respect to mechanical resistance and thermo-stability.

The porous glass fibers were prepared as in Example 1. The porous material modified by metal oxides (Al2O3) were prepared as in Example 2 (sample 14). The properties of the porous fibers are presented in Table 5.

**Table 5**

| Influence of surface development and metal oxide deposition on mechanical resistance and thermo-stability of glass fibers | | | | | |
|---|---|---|---|---|---|
| **Sample No.** | **Type of fibers** | **SSA, m**^{**2**}**/g** | **F, N** | **E 10**^{**-5**}**, MPa** | **T**_{**max**}**, °C** |
| 1 | EGF-2 | 2 | 83.7 | 8.03 | 350 |
| 7 | EGF-15 | 15 | 23.9 | 4.02 | 350 |
| 8 | EGF-40 | 40 | 4.5 | 0.41 | 350 |
| 5 | EGF-340 | 340 | 2.6 | 0.33 | 400 |
| 14 | EGF/Al₂O₃-40 (EGF-250 modified by Al₂O₃ and thermotreated at 700°C, 2h) | 40 | 9.7 | 1.4 | 700 |

### Example 5

This example illustrates the method of deposition of second oxide on the surface of porous part of fibers previously modified by metal oxide.

Dry leached fibers containing TiO2 (0.8%wt.) prepared as in Example 2 were exposed to aqueous solution of NH4VO3 (2.5%) for 0.5 hour and air dried. Then the samples were calcined at 500°C for 1 hour.

The final product contained 0.8%wt. of TiO2 and 1.0% of V2O5.

### Example 6

This example illustrates the method of deposition of metal on the surface of porous part of fibers previously modified by metal oxide.

Dry leached fibers containing Al2O3 (0.7%wt.) prepared as in Example 2 were equilibrated with aqueous solution of H2PtCl6 (0.5%) for 0.5 hour and air dried. Then the samples were calcined at 500°C for 1 hour in the stream of H2.

The final product contained 0.7%wt. of Al2O3 and 0.1% of metallic Pt.

### Example 7

This example illustrates the method of deposition of organosilane on the surface of porous part of fibers previously modified by metal oxide to control hydrophobisity of the material.

Dry leached fibers containing Al2O3 (0.7%wt.) prepared as in Example 2 were heated up to 400°C for 0.5 hour and cooled in dry atmosphere. The sample was placed into toluene solution of methyltriethoxysilane (0.5%) and boiled for 0.5 hour. Then the sample was washed with toluene 3 times and air dried overnight.

### Example 8

This example illustrates the method of deposition of metal complex on surface of porous part of fibers previously modified by metal oxide.

Dry leached fibers (4.5 g) containing Al2O3 (0.7%wt.) prepared as in Example 2 were placed into 100 ml aqueous solution of tetra-Na salt of Cu(II)-phthalocyanine-tetrasuphuric acid (0.5% wt) for 0.5 hour, then washed with water and air dried. The blue final product contained 0.7%wt. of Al2O3 and 0.05%wt of Cu.

### Example 9

This example illustrates the use of porous fibers, in the form of woven fabric, modified by metal oxide (samples 14 and 15), onto which platinum was deposited, for the catalytic complete oxidation of propane.

The samples were prepared as in Example 6.

Continuous fixed bed reactor with external recycle loop was used in this study. In each test, rolled up catalysts (0.4 g) in the form of knitted gauze was placed into the reactor. The temperature in the catalyst bed was measured with thermocouple. C02 concentration was continuously measured by infrared. Gas mixture of 0.5% C3H8, 3-10% 02 and Ar was used.

Activity of the catalysts in C₃H₈ oxidation is presented in Table 6. Platinum supported on porous fibers containing titanium oxide is more active in comparison with platinum supported on non-modified porous fibers and containing aluminum oxide.

**Table 6**

| Activity of glass fiber catalysts in propane oxidation. | | | | |
|---|---|---|---|---|
| **Sample** | **SSA, m**^{**2**}**/g** | **ΔT, °C** | **E**_{**a**}**, kcal/mol** | **R*10**^{**-17**} **at 320°C, molecules/g/sec** |
| 0.2Pt/GF | 15 | 310-330 | 20.8 | 3.09 |
| 0.2Pt/GF/Al₂O₃ | 40 | 304-348 | 22.8 | 3.55 |
| 0.1Pt/GF/TiO₂ | 55 | 277-320 | 27.6 | 5.6 |
| 0.2Pt/GF/TiO₂ | 55 | 277-320 | 23.7 | 10.7 |
| 0.3Pt/GF/TiO₂ | 55 | 270-324 | 22.8 | 11.7 |

| | | | | |
|---|---|---|---|---|
| R* is the reaction rate expressed in molecules per g of catalyst and per sec | | | | |

### Example 10

This example illustrates the use of porous fibers, in the form of woven fabric, modified by two metal oxides for the catalytic liquid-phase hydroxylation of phenol.

The samples prepared as in Example 5 were tested in this reaction.

In each run, fibrous catalysts (1 g) containing TiO₂ (0. 8%wt.) and modified by V₂O₅ and Cu²⁺ were placed into batch reactor containing 50 ml demineralised H₂O, 1 ml aqueous _{H2O2} and 1 ml phenol, stirred at 75 °C during 9 hours. The results for the liquid phase phenol hydroxylation over the porous fibrous catalysts are presented in Table 7.

The catalysts demonstrated high selectivity at appreciable conversions in aqueous solutions at neutral pH.

**Table 7**

| Liquid-phase catalytic hydroxylation of phenol over glass fiber catalysts. | | | | |
|---|---|---|---|---|
| **Catalyst** | **Conversion of phenol, %** | **Selectivity, %** | | |
| | | **Cathechol** | **Hydroquinone** | **Benzoquinone** |
| GF/TiO₂/0.6%V₂O₅ | 18.0 | 57 | 43 | - |
| GF/TiO₂/1.2%CuO | 45.5 | 20 | 19 | 61 |
| GF/TiO₂/0.2%CuO | 46.0 | 18 | 17 | 65 |

## Claims

1. A low weight resistant porous glass fiber with a developed specific surface area of 5 times to 120 times the outer surface of a standard glass fiber, a material having physical, chemical or biological reactive properties being deposited on the developed surface of said porous glass fiber.

2. A porous fiber according to claim 1, characterized by a developed specific surface area comprised between 10 and 120 m2/g.

3. A porous fiber according to claim 1 or 2, wherein the active material is scarcely dispersed on the developed surface of the fiber, forms a partial layer, or forms of a complete layer or coating.

4. A low weight resistant porous glass fiber with a developed specific surface area of 20 times to 200 times the outer surface of a standard glass fiber, the developed surface of said porous glass fiber being covered with a material capable of being a support for receiving a material having physical, chemical or biological reactive properties, and a material having physical, chemical or biological reactive properties being deposited on the intermediate support material covering the porous glass fiber

5. A porous fiber according to claim 4, characterized by a developed specific surface area comprised between 60 and 400 m2/g.

6. A porous fiber according to claim 4 or 5, wherein the active material is either scarcely dispersed on the support material, forms a partial layer, or forms a complete layer or coating.

7. A porous fiber according to any claim 4 to 6, in which the support material is capable to restore at least partially the mechanical strength or resistance of the original fiber.

8. A porous fiber according to claim 7, in which the support material is selected from the group comprising oxides or oxides generated from corresponding precursors, organo-silanes or organic polymers .

9. A porous glass fiber according to any claim 1 to 3 or 4 to 8, in which the active material is selected from the group consisting essentially of metals and metal oxides, minerals and organic complexes, ion exchange resins, carbon, clay, zeolithes, mesoporous materials, enzymes, peptides, proteins, cells, antibodies, antigens, viruses and retro-viruses, plasmides, RNA and DNA sequences.

10. A porous glass fiber according to claim 9, in which of the active material is a material selected from the group comprising aluminum, silicium, titanium, zirconium, platinum, palladium, rhodium, iridium, osmium, gold, silver, magnesium, calcium, chromium, iron, copper, nickel, cobalt, in the form of metals, oxides, oxide precursors and/or metallo-organic complexes, oxides of vanadium, molybdenum, silver, lead, zinc, potassium, phosphorous and mixtures thereof.

11. A porous glass fiber according to any claim 4 to 10, in which the support material is at the same time an active material

12. A process for preparing a porous glass fiber according to claim 1 to 3, comprising the following steps :
a) treating a glass fiber to leach out part of its non silica content to generate pores within the glass fiber and increase its surface area,
b) depositing onto the surface of the treated fiber a material having physical, chemical or biological reactive properties.

13. A process according to claim 15, wherein the leaching out process is carried on until 5 to 50 % of the non silica material is removed.

14. A process for preparing a porous glass fiber according to 4 to 11, comprising the following steps :
a) treating a glass fiber to leach out a substantial part of its non silica content to generate pores within the glass fiber and increase its surface area,
b) covering at least partially the developed surface of the treated fiber with a support material,
c) depositing onto the surface of the support a material having physical, chemical or biological reactive properties.

15. A process according to claim 14, wherein the leaching out process is carried on until from about 30 to 100 % of the non silica material is removed.

16. A process according to claim 15, in which the support material is an oxide or an oxide generated from a corresponding oxide precursor, for instance by calcination.

17. A process according to any of claims 12 or 13, or 14 to 16, in which the leaching out process is conducted in a mineral acid, such as hydrochloric or nitric acid 0.5 to 5N.

18. A process according to any of claims 12 or 13, or 14 to 16, which comprises after the acidic treatment an additional alkaline leaching out step.

19. A process according to any of claims 12 or 13, or 14 to 16, in which between each successive step the glass fiber is rinsed and washed.

20. A process according to any of claims 12 or 13, or 14 to 16, wherein the active material is deposited on the surface of the treated fiber, respectively on the surface of the support, by a process such as impregnation, soaking, spraying, ion exchange, surface chemical reaction, vapor phase deposition (VPC).

21. The use of the porous glass fiber according to any of claims 1 to 3, or 4 to 11, or of a woven or non woven fabric made thereof, for chemical reactions as a catalyst for oxidation, combustion, hydrogenation, alkylation or hydroxylation chemical reactions, in which the active material is selected from the group consisting essentially of metals and metal oxides, minerals and organic complexes, ion exchange resins, clay, zeolithes, carbon and mesoporous materials.

22. The use of the porous glass fiber according to any of claims 1 to 3, or 4 to 11, or of a woven or non woven fabric made thereof, as an adsorbent or an adsorbent.

23. The use of the porous glass fiber according to any claims 1 to 3, or 4 to 11, or of a woven or non woven fabric made thereof, as a bioprobe or bioassay in biological or test kits, in which the active material is selected from the group consisting essentially of enzymes, peptides, proteins, cells, antibodies, antigens, viruses and retro-viruses, plasmides, RNA and DNA sequences.
